(19)

Europäisches
Patentamt
European
Patent Office
Office européen
des brevets

(11) **EP 3 498 101 A1**

(12) # EUROPEAN PATENT APPLICATION
published in accordance with Art. 153(4) EPC

(43) Date of publication:
**19.06.2019 Bulletin 2019/25**

(21) Application number: **17839572.9**

(22) Date of filing: **10.08.2017**

(51) Int Cl.:
***A23G 1/00*** (2006.01)   ***A23G 1/30*** (2006.01)

(86) International application number:
**PCT/JP2017/029046**

(87) International publication number:
**WO 2018/030505 (15.02.2018 Gazette 2018/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **11.08.2016 JP 2016158335**

(71) Applicants:
• **Nitto Pharmaceutical Industries, Ltd.
Muko-shi, Kyoto 617-0006 (JP)**
• **Lotte Co., Ltd.
Tokyo 160-0023 (JP)**

(72) Inventors:
• **ASHITANI, Hiroaki
Saitama-shi
Saitama 336-0027 (JP)**

• **KOYAMA, Toshiyuki
Saitama-shi
Saitama 336-0027 (JP)**
• **USAMIKRANK, Yoko
Saitama-shi
Saitama 336-0027 (JP)**
• **KABUKI, Yusuke
Saitama-shi
Saitama 336-0027 (JP)**
• **YONEJIMA, Yasunori
Muko-shi
Kyoto 617-0006 (JP)**
• **HISA, Keiko
Muko-shi
Kyoto 617-0006 (JP)**

(74) Representative: **J A Kemp
14 South Square
Gray's Inn
London WC1R 5JJ (GB)**

(54) **LACTOBACILLUS-CONTAINING CHOCOLATE AND MANUFACTURING METHOD THEREFOR**

(57)   The present invention provides lactic acid bacterium-containing chocolate containing a lactic acid bacterium in a living state, wherein the average particle size of the solid particles in the lactic acid bacterium-containing chocolate is larger than 1 $\mu$m and less than 9 $\mu$m, and a manufacturing method thereof.

Fig. 1

EP 3 498 101 A1

**Description**

[Technical Field]

The present invention relates to a lactic acid bacterium-containing chocolate containing a live lactic acid bacterium in a stabilized state and a method for manufacturing the same.

[Background Art]

A lactic acid bacterium is a bacterium that produces lactic acid from sugars. As a bacterium producing lactic acid from sugars by fermentation (lactic acid fermentation), the genera Lactobacillus, Enterococcus, Lactococcus, Pediococcus, Leuconostoc, etc. are known. Bifidobacterium is also known as a bacterium that decomposes sugars to produce lactic acid and acetic acid. Bacteria of the genus Bifidobacterium may be classified as Bacillus bifidus separately from lactic acid bacteria, but in the present specification, bacteria of the genus Bifidobacterium are also included in lactic acid bacteria.

Many kinds of microorganisms live in the human intestine, and lactic acid bacteria belonging to the genera Lactobacillus and Bifidobacterium are detected from almost all human intestines.

Probiotics have been defined by a British microbiologist Fuller as "living microorganisms that bring beneficial effects to humans by improving the balance of the intestinal flora", and needs to reach the intestine in a living state and be able to grow in the intestinal environment. Some of lactic acid bacteria regulate the immune system, endocrine system, nervous system and the like, in addition to the regulation of the intestinal flora, and are attracting attention as probiotics.

It is desirable to ingest lactic acid bacteria for health promotion and maintenance. Yogurt, lactic acid bacteria beverages, etc. are common as foods containing lactic acid bacteria. In addition to these, lactic acid bacterium-containing foods as a probiotic that is more convenient and more palatable meet the needs of modern people seeking all of health, convenience and palatability.

Patent document 1 discloses a chocolate containing lactic acid bacteria including Bacillus bifidus in a living state, and discloses a technique for improving stability from the time of manufacture; however, no study has been performed relating to the particle size of the solid particles contained in a lactic acid bacterium-containing chocolate.

The present inventors filed an application for patent document 2 directed to lactic acid bacterium-containing chocolate characterized by delivering live lactic acid bacterium to the intestine and a manufacturing method thereof. However, again, no study has been performed relating to the particle size of the solid particles contained in a lactic acid bacterium-containing chocolate.

As lactic acid bacterium expected to exhibit health promoting effect, lactic acid bacteria of genus Lactobacillus, genus Enterococcus, genus Bifidobacterium, genus Leuconostoc are known and examples thereof include Lactobacillus brevis, Lactobacillus acidophilus, Lactobacillus gasseri, Enterococcus faecalis, Bifidobacterium longum, Leuconostoc mesenteroides and the like.

As the Lactobacillus brevis, Lactobacillus brevis subsp. coagulans (commonly referred to as "Labre bacteria") and the like are known. In addition, it is said that Lactobacillus brevis has an immunostimulating action and anti-influenza virus activity, as well as an effect of suppressing increase in body weight, liver fat weight, and blood cholesterol, etc. and thus Lactobacillus brevis is a lactic acid bacterium that can expect various health effects. Leuconostoc mesenteroides is a lactic acid bacterium that has an immunostimulating action and can expect health effects. Lactobacillus acidophilus, Lactobacillus gasseri, Enterococcus faecalis or Bifidobacterium longum are all used for producing dairy products such as yoghurt and are expected to exert a health promoting effect.

[Document List]

[Patent documents]

patent document 1: JP-A-08-126473
patent document 2: JP Application No. 2016-543748

[Non-patent document]

non-patent document 1: Nippon Shokuhin Kagaku Kogaku Kaishi 48(9) pp.656-663 (2001)

[SUMMARY OF THE INVENTION]

[Problems to be Solved by the Invention]

The problem of the present invention is to provide a lactic acid bacterium-containing chocolate containing lactic acid bacterium in a living state for a long term and a manufacturing method thereof.

[Means of Solving the Problems]

A lactic acid bacterium-containing chocolate with a high survival rate of the lactic acid bacterium has been successfully produced by adding the lactic acid bacterium to a chocolate having a small particle size of solid particles.

[Effect of the Invention]

The lactic acid bacterium-containing chocolate of the present invention can contain lactic acid bacterium in a living state for a long term.
Furthermore, the lactic acid bacterium-containing chocolate of the present invention is advantageous in logistics such as preservation, transportation and display in stores, and makes it possible to stably provide the lactic acid bacterium-containing chocolate throughout the year.
In addition, surprisingly, they have found that, by decreasing the particle size and making the particle size distribution uniform, even using chocolate having high water activity, it is possible to produce a lactic acid bacterium-containing chocolate containing lactic acid bacterium in a living state for a long term, and successfully provided a lactic acid bacterium-containing chocolate containing lactic acid bacterium in a living state for a long term.

[Brief Description of the Drawings]

Fig. 1 shows particle size distribution of solid particles in the lactic acid bacterium-containing chocolate 1 of Example 1.
Fig. 2 shows particle size distribution of solid particles in the chocolate doughs 1 to 4.
Fig. 3 shows time-course ERH variation (%) of the chocolate doughs 1 to 4.
Fig. 4A is a diagram for illustrating a method for manufacturing a lactic acid bacterium-containing chocolate.
Fig. 4B is a diagram for illustrating a method for manufacturing a lactic acid bacterium-containing almond chocolate.
Fig. 4C is a diagram for illustrating a method for manufacturing a lactic acid bacterium-containing fat or oil composition.
Fig. 5 (a) (b) (c) are graphs showing the results of a resistance test of a lactic acid bacterium-containing chocolate against artificial gastric juice.
Fig. 6 is a graph showing the results of a resistance test of a lactic acid bacterium-containing chocolate and a lactic acid bacteria powder against artificial gastric juice.

[Description of Embodiments]

One embodiment of the present invention is a lactic acid bacterium-containing chocolate containing lactic acid bacterium in a living state and having an average particle size of the solid particles in the chocolate of less than 9 $\mu$m. Further preferably, the average particle size of the solid particles in the chocolate is less than 7 $\mu$m.
The lower limit of the average particle size of the solid particles in the chocolate is preferably more than 1 $\mu$m, more preferably more than 5 $\mu$m.
A preferable range of the average particle size of the solid particles in the chocolate is more than 1 $\mu$m and less than 9 $\mu$m, more preferably more than 5 $\mu$m and less than 7 $\mu$m.
To keep lactic acid bacterium living for a long term and stably, it is preferable to make the particle size of the solid particles contained in the chocolate dough uniform, and the particle size of the solid particles in the lactic acid bacterium-containing chocolate preferably has a single distribution peak.
In the present specification, chocolate is not limited by the conventions (fair competition conventions relating to the display of chocolates) or regulations under the law, and refers to chocolate mainly made of a material derived from cacao and added, where necessary, with saccharides, dairy products, other edible fats and oils, flavors, emulsifiers and the like.
The solid particle in chocolate refers to a solid particle that passed through a sieve with aperture 150 $\mu$m (100 mesh of JIS test sieve) when chocolate melted at 50°C was passed through the sieve. The solid particle generally contains particles such as cacao, milk, saccharides and the like. In lactic acid bacterium-containing chocolate, lactic acid bacterium is also contained in the solid particles. In the present invention, since the proportion of lactic acid bacterium in the lactic acid bacterium-containing chocolate is small, almost (substantially) no influence is exerted on the particle size distribution of the lactic acid bacterium-containing chocolate.

In the present specification, solid particles dispersed in chocolate or lactic acid bacterium-containing chocolate are sometimes simply referred to as particles, and the particle size of these solid particles is sometimes simply referred to as a particle size.

The chocolate of the present specification includes dark chocolate, milk chocolate, white chocolate, and further, color chocolate which is white chocolate as a base and given a desired color.

For example, milk chocolate can be prepared by blending cacao mass: 0 - 70 % by weight, whole milk powder: 0 - 20 % by weight, cocoa butter: 0 - 25 % by weight, vegetable fat or oil: 0 - 20 % by weight, sugar: 0 - 45 % by weight. Emulsifier, flavor and lactic acid bacteria powder can also be blended as appropriate. Furthermore, dietary fiber: 0 - 15 % by weight, oligosaccharide: 0 - 10 % by weight can also be blended.

In addition, the chocolate of the present invention can also be sugarless chocolate. In this case, in addition to lactic acid bacteria powder, the blend can be appropriately changed within the range of sugar alcohol: 0 - 50 % by weight, cacao mass: 0 - 70 % by weight, food made from milk and the like as the main material: 0 - 25 % by weight, vegetable fat or oil: 0 - 25 % by weight, cocoa butter: 0 - 25 % by weight. In addition, auxiliary materials such as high sweetness sweetener, emulsifier, flavor and the like can also be added as appropriate, and the amounts thereof can also be adjusted as appropriate. Furthermore, dietary fiber: 0 - 15 % by weight, oligosaccharide: 0 - 10 % by weight can also be blended in. Examples of the usable oligosaccharide include, but are not limited to, fructo-oligosaccharide, galacto-oligosaccharide, isomalto-oligosaccharide, soybean oligosaccharide and the like.

As for chocolate, cocoa beans as the material are selected, separated, roasted and ground to give cacao mass, the cacao mass, sugar, powdered milk, vegetable fat and oil, part of cocoa butter and the emulsifier are mixed in a material mixer, the mixture is uniformly atomized by a refiner such that the particles have a given size, conched, and flavor and the remaining fats and oils and emulsifier are added at the latter stage of conching to give chocolate dough. A lactic acid bacterium can be added as appropriate to the prepared chocolate dough.

Examples of lactic acid bacteria include the genus Lactobacillus (e.g. Lactobacillus brevis, Lactobacillus casei Shirota, Lactobacillus acidophilus L-92, Lactobacillus cremoris, Lactobacillus helveticus, Lactobacillus salivarius, Lactobacillus gasseri OLL 2716, Lactobacillus gasseri PA-3, Lactobacillus gasseri SBT 2055, Lactobacillus bulgaricus OLL1073R-1, Lactobacillus fermentum, Lactobacillus reuteri, Lactobacillus crispatus, Lactobacillus yogurti, Lactobacillus delbrueckii subspecies bulgaricus 2038, Lactobacillus delbrueckii subspecies delbrueckii, Lactobacillus johnsonii, Lactobacillus plantarum, etc.), the genus Streptococcus (e.g. Streptococcus thermophilus 1131, etc.), the genus Bifidobacterium (e.g. Bifidobacterium longum BB 536, Bifidobacterium longum SBT 2928, Bifidobacterium lactis GCL 2505, Bifidobacterium breve, Bifidobacterium infantis, Bifidobacterium adolescentis, Bifidobacterium bifidum, Bifidobacterium catenulatum, Bifidobacterium pseudocatenulatum, Bifidobacterium angulatum, Bifidobacterium gallicum, Bifidobacterium animalis, etc.), the genus Enterococcus (e.g. Enterococcus faecalis, Enterococcus faecium, Enterococcus hirae, etc.), the genus Lactococcus (e.g. Lactococcus lactis subspecies lactis, Lactococcus lactis subspecies cremoris, Lactococcus plantarum, Lactococcus raffinolactis, etc.), the genus Pediococcus (e.g. Pediococcus pentosaceus, Pediococcus damnosus, etc.), and the genus Leuconostoc (e.g. Leuconostoc dextranium, Leuconostoc citrovorum, Leuconostoc mesenteroides, Leuconostoc lactis, etc.), and the like.

Among them, Lactobacillus, Bifidobacterium, Enterococcus, and Leuconostoc are preferred as lactic acid bacteria in the present invention, and Lactobacillus brevis, Lactobacillus acidophilus, Lactobacillus gasseri, Enterococcus faecalis, Bifidobacterium longum, and Leuconostoc mesenteroides are more preferable, but the bacteria are not limited to those mentioned above as long as they are bacteria that produce lactic acid.

The lactic acid bacterium-containing chocolate of this embodiment preferably contains live lactic acid bacterium at not less than $1 \times 10^4$ bacteria/gram, further preferably, not less than $1 \times 10^4$ bacteria/gram and not more than $1 \times 10^{12}$ bacteria/gram, further preferably, not less than $1 \times 10^6$ bacteria/gram and not more than $1 \times 10^{12}$ bacteria/gram, furthermore preferably, not less than $1 \times 10^7$ bacteria/gram and not more than $1 \times 10^{12}$ bacteria/gram.

The lactic acid bacterium-containing chocolate of this embodiment shows the survival rate of lactic acid bacteria of not less than 50%, preferably not less than 60%, more preferably not less than 70%, after preservation at 28°C for 2 months.

The lactic acid bacterium-containing chocolate of this embodiment shows an ERH change rate of not more than 5%, preferably not more than 3%, more preferably not more than 1%, after preservation at 25°C, relative humidity 75% for 98 hr.

One embodiment of the present invention is a method for manufacturing a lactic acid bacterium-containing chocolate, and the method is characterized in that the materials are atomized to an average particle size of less than 9 μm, more preferably less than 7 μm. In this case, the lower limit of the average particle size of the solid particles is not particularly limited. It is preferably greater than 1 μm, more preferably greater than 5 μm. Generally, the average particle size is controlled by controlling the roll refiner and adjusting the amount of fats and oils in the material.

In the present invention, the atomization step is not particularly limited as long as the object particle size can be achieved, and an atomization step using an apparatus such as a refiner and the like can be mentioned.

In the lactic acid bacterium-containing chocolate, a step of adding lactic acid bacterium is not limited. For example, a lactic acid bacteria powder can be added to a chocolate dough after tempering and before molding. Also, a chocolate with a high lactic acid bacterium concentration is produced by mixing a high concentration of lactic acid bacteria powder with a chocolate, and then the chocolate with a high lactic acid bacterium concentration can be added to a chocolate dough after tempering and before molding. In manufacturing a lactic acid bacterium-containing chocolate wherein a center material is coated, a lactic acid bacteria powder is added to a chocolate dough having an adjusted temperature, and the center material can be coated with this mixture.

In addition, one embodiment of the present invention is a food containing the lactic acid bacterium-containing chocolate of the present invention. Examples thereof include lactic acid bacterium-containing chocolate confectionery added with fruit, nut, cereals, gummy, candy and the like, baked sweets, snacks, cookie, cake, ice cream, beverage, each containing a lactic acid bacterium-containing chocolate, and the like.

Also, the lactic acid bacterium-containing chocolate of the present invention, for example, can itself be a drink, such as soft drink, powdered drink, or by adding a suitable flavor thereto. To be specific, the chocolate can be mixed with juice, cow's milk, confectionery, jelly and the like and served for eating and drinking. Such food can also be provided as a food with health claims. The food with health claims also includes food and drink, particularly, food for specified health uses, food with nutrient function claims and the like, with an indication that they are used for applications such as bifidobacteria growth, intestinal flora improvement and the like.

[Example 1]

1. Preparation of Lactic Acid Bacteria Powder

Lactic acid bacterium brevis subsp. coagulans (Labre bacterium) was used as lactic acid bacteria powder. The Labre bacterium was cultured using a commonly used lactic acid bacterium culture medium (MRS medium etc.), and the cultured bacteria were collected by centrifugation or the like, freeze-dried, pulverized, and the like to obtain a powder, to which starch was added to give a lactic acid bacteria powder.

2. Manufacture of lactic acid bacterium-containing chocolate

Chocolate doughs 1 - 4 containing sugar, cacao mass, cocoa butter, whole milk powder or cow's milk, emulsifier, flavor and the like were prepared. Chocolates 1 - 4 with a high lactic acid bacterium concentration were produced by melting each chocolate dough at 40°C and adding a high concentration of lactic acid bacteria powder thereto. Each of the chocolate doughs 1 - 4 after tempering was mixed with the corresponding chocolate 1 - 4 containing a high concentration of a lactic acid bacterium, cooled and solidified to produce lactic acid bacterium-containing chocolates 1 - 4, each having a lactic acid bacteria number of $5 \times 10^7$ bacteria - $5 \times 10^8$ bacteria/gram.

The average particle size and water activity of the 4 kinds of lactic acid bacterium-containing chocolates 1 - 4 are shown in Table 1. The average particle size was measured using a laser diffraction particle size distribution analyzer manufactured by Shimadzu Corporation, and the water activity was measured using water activity measurement system AW-labo manufactured by Rotronic.

ERH (Equilibrium Relative Humidity) shown as the water activity is a ratio of the water vapor pressure when the equilibrium is reached between the object and the environment in a sealed container containing the measurement object and the saturated water vapor pressure at that temperature, and is a value 100 times the water activity (AW) taken as an index of food preservability.

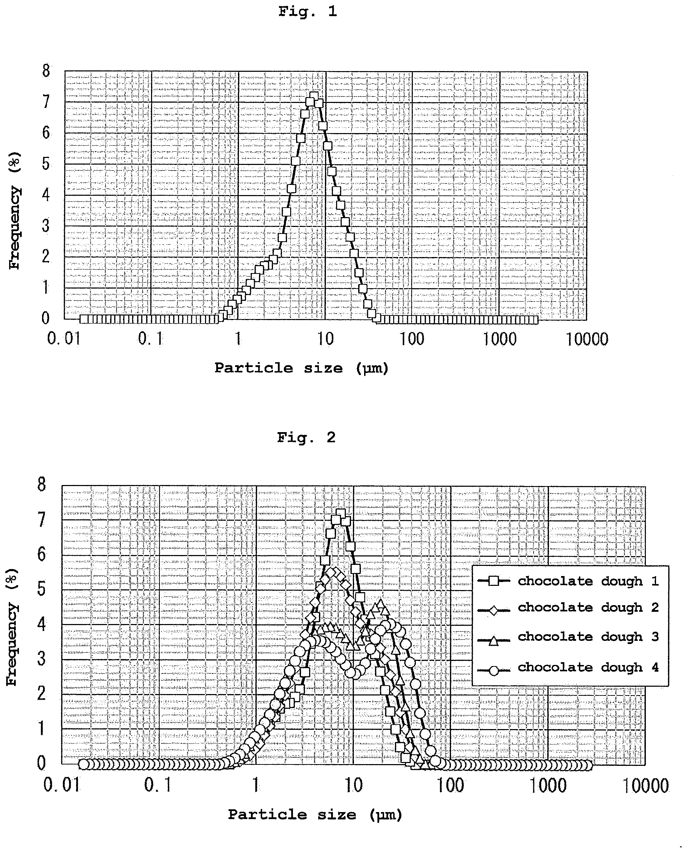

A specific measurement method of the average particle size includes placing a lactic acid bacterium-containing chocolate (0.5 g) in isopropanol (10 mL), melting the chocolate by stirring in hot water at 50°C for 10 min, and measuring a sample diluted with isopropanol such that the absorbance at the measurement wavelength 680 nm becomes 0.1 to 0.2 by a laser diffraction particle size distribution analyzer. While Labre bacterium has a club-like shape with a particle size of about 2 to 4 $\mu$m in lactic acid bacterium-containing chocolate, the number of bacteria blended per 1 g of chocolate scarcely influences the particle size distribution (see Figs. 1 and 2).

[Table 1]

| | average particle size ($\mu$m) | water activity ERH (%-°C) |
|---|---|---|
| lactic acid bacterium-containing chocolate 1 | 6.744 | 37.9-19.3 |
| lactic acid bacterium-containing chocolate 2 | 6.940 | 24.5-19.3 |

(continued)

|  | average particle size (μm) | water activity ERH (%-°C) |
|---|---|---|
| lactic acid bacterium-containing chocolate 3 | 7.026 | 38.4-20.1 |
| lactic acid bacterium-containing chocolate 4 | 9.211 | 49.4-20.5 |

The lactic acid bacterium-containing chocolates 1 - 4 were stored in a constant temperature room at 28°C, and a stability test was performed for 2 months from the production. The results of a viable bacterial count test of lactic acid bacterium on production, at one month and at 2 months are shown in Table 2. In addition, survival rate with viable bacterial counts on production as 100% is shown in Table 3.

[Table 2]

|  | time of production | at 1 month | at 2 months |
|---|---|---|---|
| lactic acid bacterium-containing chocolate 1 | $5.86 \times 10^7$ | $5.74 \times 10^7$ | $4.05 \times 10^7$ |
| lactic acid bacterium-containing chocolate 2 | $9.42 \times 10^7$ | $9.31 \times 10^7$ | $7.98 \times 10^7$ |
| lactic acid bacterium-containing chocolate 3 | $1.22 \times 10^8$ | $7.14 \times 10^7$ | $7.27 \times 10^7$ |
| lactic acid bacterium-containing chocolate 4 | $1.04 \times 10^7$ | $5.74 \times 10^8$ | $2.19 \times 10^5$ |

[Table 3]

|  | time of production | at 1 month | at 2 months |
|---|---|---|---|
| lactic acid bacterium-containing chocolate 1 | 100% | 98.0% | 69.1% |
| lactic acid bacterium-containing chocolate 2 | 100% | 98.8% | 84.7% |
| lactic acid bacterium-containing chocolate 3 | 100% | 58.5% | 59.6% |
| lactic acid bacterium-containing chocolate 4 | 100% | 55.2% | 2.1% |

From the results, it is clear that the lactic acid bacterium-containing chocolates 1 - 3 having a comparatively small average particle size of solid particles contained in the chocolate show a strikingly high survival rate of lactic acid bacterium compared with the lactic acid bacterium-containing chocolate 4 having a large particle size.

The stability of lactic acid bacteria is greatly affected by moisture contained in the food and, generally, it is difficult to keep lactic acid bacteria in a living state for a long time in foods with high water activity. In the lactic acid bacterium-containing chocolates 1 and 3, even though the water activity ERH was as high as about 40%, the survival rate of the lactic acid bacterium was high. It is known that the water activity of chocolate is difficult to control with the materials and manufacturing methods.

From this Example, by achieving a small particle size of chocolate, even using chocolate having a comparatively high water activity, it is possible to produce a lactic acid bacterium-containing chocolate containing lactic acid bacterium in a living state for a long term.

[Example 2]

Study of Particle Size Distribution of Solid Particles in Lactic Acid Bacterium-Containing Chocolate

The particle size distribution of the solid particles in the lactic acid bacterium-containing chocolate 1 produced in Example 1 is shown in Fig. 1. The particle size distribution of Fig. 1 shows a single peak.

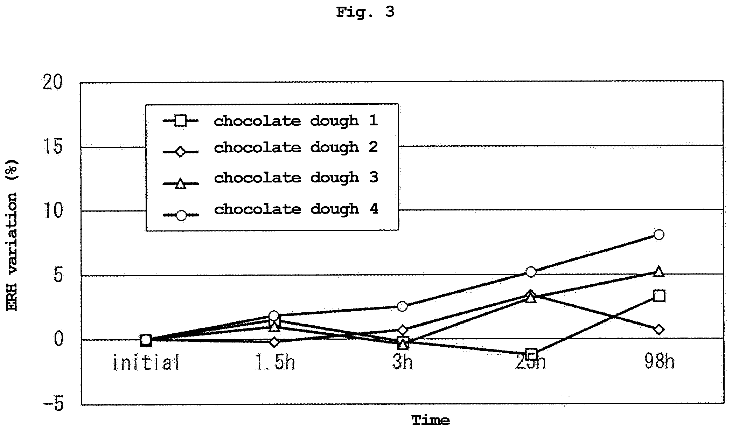

The correlation between particle size distribution of solid particles in chocolate dough and water activity was studied. Four kinds of chocolate doughs having different particle size distributions were prepared (chocolate doughs 1 - 4). The particle size distribution of the solid particles in each dough was as shown in Fig. 2. These chocolate doughs were stored under the conditions of 25°C 75%RH (Relative Humidity) for 98 hr and a time-course increase in the water activity at that time was observed. The results of time-course ERH variation (%) are shown in Fig. 3. The chocolate doughs 1, 2 showed a single distribution peak and 3, 4 showed two peaks in the particle size distribution. Also, chocolate doughs 3, 4 showed greater ERH variation as compared to chocolate doughs 1, 2.

From the results, it is clear that a chocolate dough showing one peak of particle size distribution of the solid particles contained therein is slow in the increase rate of ERH. The stability of lactic acid bacteria becomes lower as the ERH increases, and suppressing the increase in ERH of the chocolate dough itself is important for keeping the lactic acid bacteria in a living state. This Example shows that a stabler lactic acid bacterium-containing chocolate is produced by achieving a single distribution peak of the particle size distribution of the solid particles contained in the chocolate.

The following are Production Examples of lactic acid bacterium-containing chocolate and Reference Examples showing the usefulness thereof, and do not constitute a part of the present invention.

[Reference Example 1] Lactic Acid Bacterium-Containing Chocolate (Labre bacterium)

1. Preparation of Lactic Acid Bacteria Powder

Lactobacillus brevis subsp. coagulans (Labre bacterium) belonging to Lactobacillus brevis was used as lactic acid bacteria powder. The Labre bacterium was cultured using a commonly used lactic acid bacterium culture medium (MRS medium etc.), and the cultured bacteria were collected by centrifugation or the like, freeze-dried, pulverized, etc. to obtain a powder, to which starch was added to give lactic acid bacteria powder. The lactic acid bacteria powder contains preferably from $1 \times 10^5$ viable lactic acid bacteria/gram to $1 \times 10^{13}$ viable lactic acid bacteria/g, more preferably from $1 \times 10^7$ viable lactic acid bacteria/gram to $1 \times 10^{13}$ viable lactic acid bacteria/gram, and even more preferably from $1 \times 10^8$ viable lactic acid bacteria/gram to $1 \times 10^{13}$ viable lactic acid bacteria/gram.

2. Production of Lactic Acid Bacterium-Containing Chocolate

Generally, chocolate is obtained by selecting, separating, roasting and grinding cacao beans as a raw material to obtain cacao mass, mixing cacao mass, sugar, powdered milk, vegetable fat or oil, part of cocoa butter and part of emulsifier in a raw material mixer, uniformly atomizing the mixture by a refiner so that the particles will have a given size, subjecting the atomized product to a conching process, and adding a flavor, lactic acid bacteria powder and the remaining cocoa butter and emulsifier at the latter stage of conching to prepare a chocolate dough. In some cases, this chocolate dough is stored at about from 45°C to 50°C in a tank for about 4 days on average. This storage is a so-called waiting time caused by the operation of the production line. Thereafter, the dough is tempered at a temperature of about from 28°C to 30°C, then it is filled in a mold for molding, cooled/solidified, and unmolded to obtain a chocolate, which is packaged, inspected, and shipped after aging.

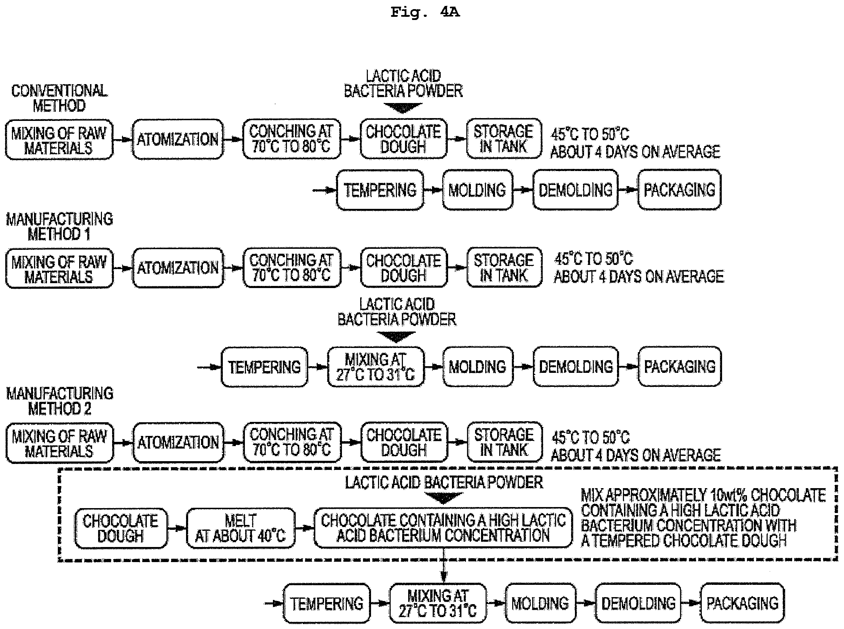

Based on this manufacturing method, a lactic acid bacterium-containing chocolate was manufactured by adding lactic acid bacteria powder by the conventional manufacturing method (lactic acid bacteria powder was added at the same timing as addition of flavor and the like), Manufacturing Method 1, and Manufacturing Method 2. The respective manufacturing methods are outlined in Fig. 4A.

Conventional Manufacturing Method

Lactic acid bacteria powder was added to a chocolate dough which had reached 45 to 50°C after conching, and after 4 days storage, the dough was tempered, molded, etc.

Manufacturing Method 1

Lactic acid bacteria powder was added to a chocolate dough (27 to 31°C) for which tempering had been completed. This lactic acid bacterium-containing chocolate preferably contains lactic acid bacterium in a living state at not less than $1 \times 10^5$ bacteria/gram and not more than $1 \times 10^{12}$ bacteria/gram, further preferably, not less than $1 \times 10^7$ bacteria/gram and not more than $1 \times 10^{12}$ bacteria/gram, furthermore preferably, not less than $1 \times 10^8$ bacteria/gram and not more than $1 \times 10^{12}$ bacteria/gram.

Manufacturing Method 2

A chocolate with a high lactic acid bacterium concentration was manufactured by melting in advance a chocolate dough at 40°C and adding a high concentration of lactic acid bacteria powder thereto. Incidentally, in the chocolate with a high lactic acid bacterium concentration, viable lactic acid bacteria are contained in an amount of preferably from $1 \times 10^5$ viable lactic acid bacteria/gram to $1 \times 10^{12}$ viable lactic acid bacteria/gram, more preferably from $1 \times 10^7$ viable lactic acid bacteria/gram to $1 \times 10^{12}$ viable lactic acid bacteria/gram, even more preferably from $1 \times 10^8$ viable lactic acid bacteria/gram to $1 \times 10^{12}$ viable lactic acid bacteria/gram. The chocolate dough after tempering was adjusted to 27°C to 31°C, and the chocolate with a high lactic acid bacterium concentration was added thereto and then mixed together.

In any of the manufacturing methods mentioned above, production was carried out according to the formulation of milk chocolate shown in Table 4.

[Table 4]

|  | % by weight |
|---|---|
| Cacao mass | 17 |
| Whole milk powder | 20 |
| Cocoa butter | 12 |
| Vegetable fat or oil | 10 |
| Sugar | 40 |
| Emulsifier | 0.4 |
| Flavor | 0.1 |
| Lactic acid bacteria powder | 0.5 |
| Total | 100 |

Even with any of the above-mentioned manufacturing methods, a lactic acid bacterium-containing chocolate could be manufactured. When Manufacturing Method 2 is used, this method is more preferred compared to the other methods from the viewpoint of production control since the method can prevent scattering of lactic acid bacteria and thus contamination of the production line. In addition, according to Manufacturing Method 2, lactic acid bacteria can be uniformly mixed with a chocolate dough in a shorter time.

The blending of the lactic acid bacterium-containing chocolate may be carried out by adding, in addition to the lactic acid bacteria powder, other additives in the range of amounts being changed as appropriate, such as in a range of from 0 to 70% by weight of cacao mass, from 0 to 20% by weight of whole milk powder, from 0 to 25% by weight of cocoa butter, from 0 to 20% by weight of vegetable fat or oil, and 0 to 45% by weight of sugar. Further, auxiliary materials such as emulsifiers and flavors can be added as appropriate, and the blending amounts thereof can be appropriately adjusted. Furthermore, a dietary fiber in an amount of from 0 to 15% by weight and an oligosaccharide in an amount of from 0 to 10% by weight may be blended.

3. Resistance Test of Lactic Acid Bacterium-Containing Chocolate against Artificial Gastric Juice

Based on Manufacturing Method 2, a lactic acid bacterium-containing chocolate was prepared so that the content of lactic acid bacteria powder became 0.25% by weight. That is, only the content of the lactic acid bacteria powder was changed according to Table 4. Using the lactic acid bacterium-containing chocolate as a sample, a resistance test against artificial gastric juice was carried out based on the following procedure.

(1) An MRS medium adjusted to a predetermined pH and supplemented with 0.04% pepsin was used as an artificial gastric juice (according to Non-Patent Literature 1). The medium was 300 ml. The above artificial gastric juice was adjusted to pH 2.5 with a dilute hydrochloric acid. Since the main component of the stomach acid is hydrochloric acid, other acids are not used.

(2) One chocolate piece (2 grams) was soaked in an artificial gastric juice kept at 37°C, shaken to such a degree that the liquid surface gently ripples, and 1 ml of artificial gastric juice was taken after 30 minutes, 1 hour and 2 hours, after which time the number of viable bacteria contained therein was measured. The method of measuring the number of viable bacteria is carried out in the same manner as in the time course test on the number of viable bacteria in the lactic acid bacteria. It is to be noted that the maximum time is 2 hours because the time taken for the digestive substances in the stomach to be completely transferred to the duodenum is about 2 hours. In addition, as a control, experiments were similarly carried out on lactic acid bacterium-containing beverages which contain Labre bacteria by appropriately adjusting,the added amount so that the number of viable bacteria at the time of addition into artificial gastric juice was about the same as that of lactic acid bacterium-containing chocolate.

(3) Results

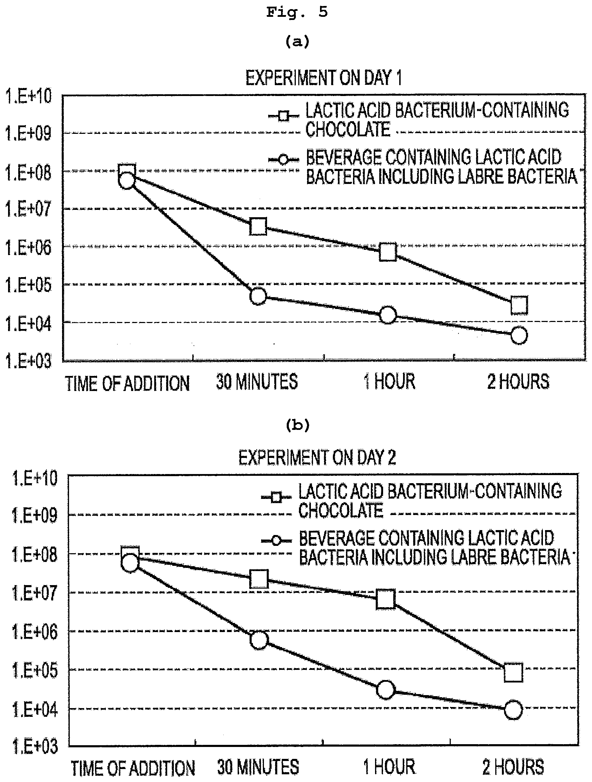

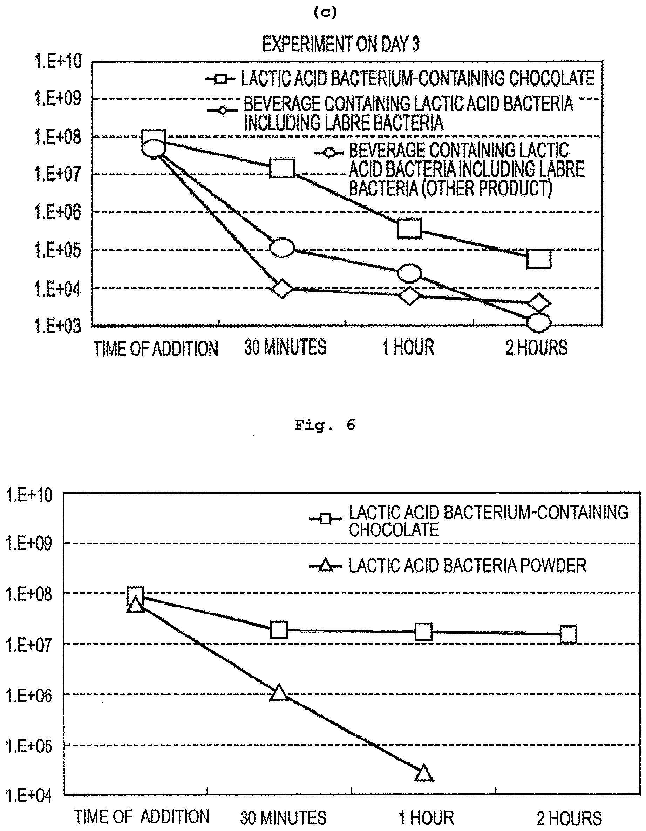

Since the same experiment was conducted three times at different dates and times, the results are shown in Table 5. These results are shown in the graphs of Fig. 5. In the third experiment, two kinds of lactic acid bacterium-containing beverages containing Labre bacteria were used as a comparison control.

[Table 5]

| Results of experiment on day 1 | | | | |
|---|---|---|---|---|
| | time of addition | 30 minutes | 1 hour | 2 hours |
| Lactic acid bacterium-containing chocolate | 8.62E +07 | 3.24E +06 | 6.90E +05 | 2.82E +04 |
| Lactic acid bacterium-containing beverage containing Labre bacteria | 5.60E +07 | 4.71E +04 | 1.47E +04 | 4.50E +03 |
| Results of experiment on day 2 | | | | |
| | time of addition | 30 minutes | 1 hour | 2 hours |
| Lactic acid bacterium-containing chocolate | 8.62E +07 | 2.13E +07 | 6.18E +06 | 7.77E +04 |
| Lactic acid bacterium-containing beverage containing Labre bacteria | 5.60E +07 | 5.58E +05 | 2.88E +04 | 8.70E +03 |
| Results of experiment on day 3 | | | | |
| | time of addition | 30 minutes | 1 hour | 2 hours |
| Lactic acid bacterium-containing chocolate | 8.62E +07 | 1.47E +07 | 3.81E +05 | 6.30E +04 |
| Lactic acid bacterium-containing beverage containing Labre bacteria | 4.25E +07 | 9.60E +03 | 6.30E +03 | 3.90E +03 |
| Lactic acid bacterium-containing beverage containing Labre bacteria (other product) | 5.00E +07 | 1.20E +05 | 2.46E +04 | 1.20E +03 |

From the results of the resistance test of the lactic acid bacterium-containing chocolate against artificial gastric juice, it was surprisingly found that the lactic acid bacterium-containing chocolate prepared by Manufacturing Method 2 has a very high survival rate of lactic acid bacteria in artificial gastric juice and its survival rate was much higher than that of the lactic acid bacterium-containing beverage as the control.

4. Comparative Resistance Test of Lactic Acid Bacterium-Containing Chocolate and Lactic Acid Bacteria Powder against Artificial Gastric Juice

As with the artificial gastric juice resistance test of lactic acid bacterium-containing chocolate, an artificial gastric juice resistance test using a lactic acid bacterium-containing chocolate prepared so that the content of lactic acid bacteria powder becomes 0.25% by weight based on Manufacturing Method 2 and lactic acid bacteria powder itself was conducted in the same manner as in the artificial gastric juice resistance test of lactic acid bacterium-containing chocolate.
However, as a control, the lactic acid bacteria powder was appropriately adjusted so that the number of viable bacteria at the time of addition in the artificial gastric juice was approximately the same as that of the lactic acid bacterium-containing chocolate, and a similar experiment was conducted.
The results are shown in Table 6. Fig. 6 shows the graph of the results.

[Table 6]

| | time of addition | 30 minutes | 1 hour | 2 hours |
|---|---|---|---|---|
| Lactic acid bacterium-containing chocolate | 8.75E+07 | 1.89E+07 | 1.71E+07 | 1.56E+07 |
| Lactic acid bacteria powder | 6.21E+07 | 1.10E+06 | 2.82E+04 | 0.00E+00 |

In the artificial gastric juice resistance test of this Reference Example, it was found that the survival rate of lactic acid bacteria at lapse of 30 minutes, 1 hour and 2 hours in the lactic acid bacterium-containing chocolate of the present invention, that is, the artificial gastric juice resistance of the lactic acid bacteria in the lactic acid bacterium-containing chocolate was much higher than that of the lactic acid bacteria powder.

5. Time Course Test on Number of Viable Lactic Acid Bacteria in Lactic Acid Bacterium-Containing Chocolate

In the same manner as in the artificial-gastric juice resistance test of lactic acid bacterium-containing chocolate, a lactic acid bacterium-containing chocolate having the content of 0.25% by weight of lactic acid bacteria powder was prepared based on Manufacturing Method 2.

The number of viable lactic acid bacteria in a sample of a lactic acid bacterium-containing chocolate immediately after production, or in a sample stored for 1 month to 14 months at room temperature (about 18°C) was examined by the following method. A similar experiment was also conducted on a lactic acid bacterium-containing soft candy as a control.

(1) One fragment or about 1 g of a sample was taken, and the mass was precisely weighed. The sample was placed in a diluentof 100 ml, shaken vigorously, and homogeneously suspended as a sample stock solution. 1 ml of the sample stock solution was added to 9 ml of the separately dispensed diluent and diluted 10-fold. The same operation was repeated to prepare a sample solution.

(2) An appropriate amount of 1 ml or less of the sample solution was dispensed into two petri dishes, and an MRS agar medium kept at 50°C was added thereto, mixed and then solidified.

(3) After the solidification, anaerobic cultivation was carried out at 35 to 37°C for 48 to 72 hours, and the number of colonies which appeared was counted to obtain an average colony number.

(4) The number of viable bacteria (CFU) in 1 g of the sample was calculated by the following calculation formula.

$$\text{Number of viable bacteria (CFU/g)} = \text{Average number of colonies (CFU)} \times \text{Dilution factor} \times \text{Sample stock solution (ml)} / \text{Addition amount of sample solution (ml)} / \text{Sampled amount (g)}$$

(5) Results

The experiment was carried out at room temperature (about 18°C) and the results are shown in Table 7.

[Table 7]

|  | immediately after production | 1 month | 2 months | 6 months | 12 months | 14 months |
|---|---|---|---|---|---|---|
| Number of viable bacteria (CFU/g) | 1.04E+08 | 1.16E+08 | 1.60E+08 | 9.08E+07 | 8.08E+07 | 6.62E+07 |
| Survival rate | 100% | 111% | 153% | 87% | 77% | 63% |

Regarding the lactic acid bacterium-containing soft candies, the time course test of the number of lactic acid bacteria was similarly examined, and the results were as shown in Table 8.

[Table 8]

|  | immediately after production | 1 month | 2 months |
|---|---|---|---|
| Number of viable bacteria (CFU/g) | 2.18E+07 | 3.43E+03 | 5.95E+01 |

In the soft candy, most of the lactic acid bacteria were dead at one month after production and there were few viable bacteria after two months. It can be said that the survival rate is almost 0% in either 1 month or 2 months after production. In comparison, the lactic acid bacterium-containing chocolate could extremely stably maintain the viable bacterial state of lactic acid bacteria. Also, when looking at the results of samples after 14 months of production under room temperature (about 18°C), lactic acid bacteria are guaranteed to be alive for 1 year at room temperature because of good stability of lactic acid bacteria.

6. Comparison of Number of Lactic Acid Bacteria Contained in Lactic Acid Bacterium-Containing Chocolate Produced by Each Manufacturing Method

The number of lactic acid bacteria per gram of lactic acid bacterium-containing chocolates manufactured respectively by the conventional manufacturing method, Manufacturing Method 1, and Manufacturing Method 2 was measured. Table 9 shows the theoretical values of lactic acid bacteria calculated from the number of lactic acid bacteria contained in the added lactic acid bacteria powder and the measured values.

[Table 9]

|  | conventional manufacturing method | Manufacturing Method 1 | Manufacturing Method 2 |
| --- | --- | --- | --- |
| Theoretical value (CFU/g) | 9.24E+07 | 9.24E+07 | 9.24E+07 |
| Measured value (CFU/g) | 2.40E+07 | 1.04E+08 | 9.88E+07 |

The number of lactic acid bacteria in the conventional manufacturing method decreased due to the inactivation of the bacteria by the manufacturing process. In Manufacturing Method 1 and Manufacturing Method 2, it is possible to prevent inactivation in the process, and since the difference in the number of lactic acid bacteria is about 5 times as compared with the conventional manufacturing method, it can be said that Manufacturing Method 1 and Manufacturing Method 2 are each an excellent manufacturing method for increasing the number of viable bacteria reaching the intestine. With respect to the chocolate with a high lactic acid bacterium concentration of about $1.4 \times 10^9$ bacteria/gram of the lactic acid bacteria powder manufactured in the process of Manufacturing Method 2, the number of viable lactic acid bacteria in the chocolate after allowed to stand at 45°C for 2 days was similarly measured. As a result, the number hardly changed and was about $1.3 \times 10^9$ bacteria/gram. From this, it can be considered that the decrease in the number of lactic acid bacteria in the conventional manufacturing method is not simply due to heat, but it is considered that agitation for a long time during storage, a tempering operation or the like affects the decrease in the number of bacteria.

7. Resistance Test of Lactic Acid Bacterium-Containing Chocolate Produced by Each Manufacturing Method against Artificial Gastric Juice

Using the lactic acid bacterium-containing chocolates prepared according to the conventional manufacturing method, Manufacturing Method 1, Manufacturing Method 2, a resistance test of a lactic acid bacterium-containing chocolate against artificial gastric juice was carried out in the same manner as in the resistance test of lactic acid bacterium-containing chocolate against artificial gastric juice.

Results

The results are expressed as survival rates in Table 10 when the number of bacteria at the time of production of each manufacturing method is defined as 100%, because the number of bacteria at the time of production varies depending on each manufacturing method.

[Table 10]

|  | number of bacteria at the time of production | 30 minutes | 1 hour | 2 hours |
| --- | --- | --- | --- | --- |
| Conventional method | 100% | 37.5% | 20.2% | 17.6% |
| Manufacturing Method 1 | 100% | 33.3% | 29.6% | 23.1% |
| Manufacturing Method 2 | 100% | 38.3% | 38.3% | 32.1% |

From the above results, it is surprisingly found that the lactic acid bacterium-containing chocolates prepared by Manufacturing Method 1 and Manufacturing Method 2 have a higher survival rate of lactic acid bacteria in the artificial gastric juice resistance test than the survival rate of the lactic acid bacterium-containing chocolate prepared by the conventional manufacturing method. Therefore, it was found that Manufacturing Method 1 and Manufacturing Method 2 are excellent manufacturing methods even in resistance to gastric acid.

As described above, from the results of this Reference Example, it was surprisingly found that the method for manufacturing lactic acid bacterium-containing chocolate according to the present invention is a simple method, but is a very advantageous method to maintain the number of bacteria during production very high. Further, the lactic acid bacterium-containing chocolate obtained by a very excellent manufacturing method of the invention more resistant to gastric acid than lactic acid bacteria beverages and the like and further has higher acid resistance than lactic acid bacterium-containing chocolate manufactured by the conventional manufacturing method. In addition, it turned out that the lactic acid bacterium-containing chocolate manufactured by the manufacturing method of the invention is a chocolate which further enhances the effect of probiotics, and is a food with high palatability and high usefulness for maintaining health.

[Reference Example 2] Lactic Acid Bacterium-Containing Chocolate (Lactic Acid Bacteria Other Than Labre Bacteria)

1. Production of Lactic Acid Bacterium-Containing Chocolate

Using the formulation as shown in Table 4 lactic acid bacterium-containing chocolates were prepared according to Manufacturing Method 2 by changing the Labre bacteria with other lactic acid bacteria, namely Lactobacillus acidophilus, Lactobacillus gasseri, Enterococcus faecalis, Bifidobacterium longum, or Leuconostoc mesenteroides so that the lactic acid bacteria powder was 0.5% by weight in the case of Leuconostoc mesenteroides or 0.25% by weight in the case of the other 4 bacteria.

2. Time Course Test on Number of Viable Lactic Acid Bacteria in Lactic Acid Bacterium-Containing Chocolate

Regarding the manufactured lactic acid bacterium-containing chocolate, as with a time course test on the number of viable lactic acid bacteria in the lactic acid bacterium-containing chocolate of Reference Example 1, the number of viable lactic acid bacteria in a sample of lactic acid bacterium-containing chocolate immediately after production or after stored at room temperature of about 18°C to about 25°C for 1 month to 3 months was examined. The results are shown in Table 11 below. It was found that the bacteria in the various bacteria-containing chocolates at 3 months after production could be maintained in an extremely stable and living state for various bacteria.

[Table 11]

|  | immediately after production | 1 month | 2 months | 3 months |
|---|---|---|---|---|
| Lactobacillus acidophilus | 4.43E+07 | 4.62E+07 | 6.00E+07 | 4.43E+07 |
| Lactobacillus gasseri | 5.88E+07 | 5.43E+07 | 7.52E+07 | 6.87E+07 |
| Enterococcus faecalis | 3.89E+07 | 3.56E+07 | 4.39E+07 | 3.45E+07 |
| Bifidobacterium longum | 4.66E+07 | 4.21E+07 | 4.32E+07 | 4.89E+07 |
| Leuconostoc mesenteroides | 1.28E+08 | 1.27E+08 | - | 1.22E+08 |

3. Resistance Test of Lactic Acid Bacterium-Containing Chocolate Against Artificial Gastric Juice

A resistance test of the manufactured lactic acid bacterium-containing chocolate against artificial gastric juice was carried in the same manner as in Reference Example 1. In addition, as a control, experiments were also carried out similarly for each bacteria powder. The results are shown in Table 12 below. It was found that the resistance of the lactic acid bacteria in various bacteria-containing chocolate against artificial gastric juice was much higher when compared to the lactic acid bacteria powder.

[Table 12]

|  |  | time of addition | 30 minutes | 1 hour | 2 hours |
|---|---|---|---|---|---|
| Lactobacillus acidophilus | -containing chocolate | 1.02E+08 | 7.14E+07 | 4.32E+07 | 4.68E+07 |
|  | Bacteria powder | 6.67E+07 | 2.26E+07 | 1.69E+07 | 1.83E+07 |
| Lactobacillus gasseri | -containing chocolate | 1.27E+08 | 5.43E+07 | 4.14E+07 | 6.24E+07 |
|  | Bacteria powder | 5.98E+07 | 1.33E+07 | 6.96E+06 | 6.90E+05 |
| Enterococcus faecalis | -containing chocolate | 8.34E+07 | 7.86E+07 | 3.57E+07 | 3.00E+07 |
|  | Bacteria powder | 5.15E+07 | 0.00E+00 | 0.00E+00 | 0.00E+00 |

(continued)

|  |  | time of addition | 30 minutes | 1 hour | 2 hours |
|---|---|---|---|---|---|
| Bifidobacterium longum | -containing chocolate | 1.02E+08 | 3.18E+07 | 1.05E+07 | 9.30E+05 |
|  | Bacteria powder | 6.76E+07 | 0.00E+00 | 0.00E+00 | 0.00E+00 |
| Leuconostoc mesenteroides | -containing chocolate | 5.42E+08 | 1.44E+08 | 7.20E+07 | 8.58E+07 |
|  | Bacteria powder | 5.08E+08 | 2.40E+03 | 0.00E+00 | 8.40E+03 |

[Reference Example 3] Lactic Acid Bacterium-Containing Almond Chocolate

1. Production of Lactic Acid Bacterium-Containing Almond Chocolate

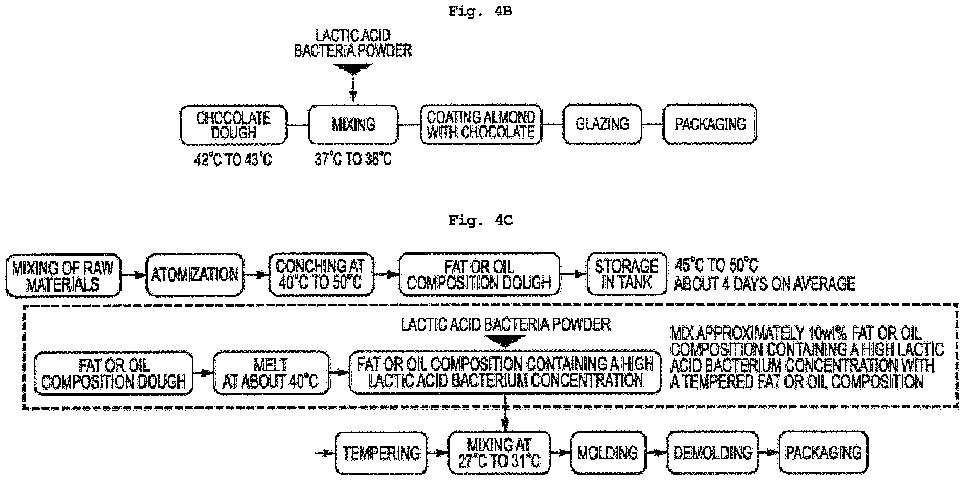

Labre bacteria were used as lactic acid bacteria, and Labre bacteria powder was prepared in the same manner as in Reference Example 1. The blending ratio is as shown in Table 13 below. As the outline of the manufacturing method is shown in Fig. 4B, lactic acid bacteria powder was added to a chocolate dough which was stored at 42°C to 43°C and then adjusted to 37°C to 38°C, and the chocolate was used for coating almonds. The lactic acid bacterium-containing almond chocolate can be made by blending lactic acid bacteria powder together with 0 to 45% by weight of sugar, 0 to 20% by weight of whole milk powder, 0 to 70% by weight of cacao mass, 0 to 25% by weight of cocoa butter, and 0 to 20% by weight of vegetable fat or oil, these amounts being appropriately changed within the above range. In addition, auxiliary materials such as emulsifiers and flavors may be added as appropriate, and the blending amounts thereof may be appropriately adjusted. Further, 0 to 15% by weight of dietary fiber and 0 to 10% by weight of oligosaccharide may be blended. The type of the center material is not limited to almonds but may be appropriately changed, and the amount of the center material to be blended may be appropriately adjusted.

[Table 13]

|  | % by weight |
|---|---|
| Sugar | 32 |
| Almond | 25 |
| Whole milk powder | 15 |
| Cacao mass | 14 |
| Cocoa butter | 8 |
| Vegetable fat or oil | 5 |
| Brightener | 0.5 |
| Emulsifier | 0.4 |
| Flavor | 0.1 |
| Lactic acid bacteria powder | 0.4 |
| Total | 100 |

2. Time Course Test on Number of Viable Lactic Acid Bacteria in Lactic Acid Bacterium-Containing Almond Chocolate

Regarding the manufactured lactic acid bacterium-containing almond chocolate, as with a time course test on the number of viable lactic acid bacteria in the lactic acid bacterium-containing chocolate in Reference Example 1, the number of viable lactic acid bacteria in a sample of lactic acid bacterium-containing almond chocolate immediately after production or after stored at room temperature (about 18°C) for 3 months to 7 months was examined. The results are shown in Table 14 below. It was found that the bacteria in the lactic acid bacterium-containing almond chocolate could be maintained in an extremely stable and living state.

[Table 14]

| | immediately after production | 3 months | 5 months | 7 months |
|---|---|---|---|---|
| Number of viable bacteria (CFU/g) | 3.70E+07 | 2.20E+07 | 8.10E+06 | 6.00E+06 |

3. Resistance Test of Lactic Acid Bacterium-Containing Almond Chocolate Against Artificial Gastric Juice

A resistance test of the manufactured lactic acid bacterium-containing almond chocolate against artificial gastric juice was carried out in the same manner as in Reference Example 1. The results are shown in Table 15 below. Also, experiments were carried out similarly for lactic acid bacteria powder as a control. It was found that the resistance of the lactic acid bacteria in the lactic acid bacterium-containing almond chocolate against artificial gastric juice was much higher when compared to the lactic acid bacteria powder.

[Table 15]

| | time of addition | 30 minutes | 1 hour | 2 hours |
|---|---|---|---|---|
| Lactic acid bacterium-containing almond chocolate | 2.62E+08 | 9.60E+07 | 8.10E+07 | 9.60E+07 |
| Lactic acid bacteria powder | 2.94E+08 | 3.84E+04 | 1.14E+04 | 0.00E+00 |

[Reference Example 4] Lactic Acid Bacterium-Containing Sugarless Chocolate

In this example, a sugarless chocolate containing lactic acid bacteria was manufactured with the formulation shown in Table 16 below according to Manufacturing Method 2.

[Table 16]

| | % by weight |
|---|---|
| Sugar alcohol | 34 |
| Cacao mass | 31 |
| Milk powder | 16 |
| Vegetable fat or oil | 16 |
| Cocoa butter | 2 |
| Emulsifier | 0.5 |
| Flavor | 0.2 |
| High sweetness sweetener | 0.1 |
| Lactic acid bacteria powder | 0.5 |
| Total | 100 |

In a time course test and an artificial gastric juice resistance test of lactic acid bacteria, lactic acid bacterium-containing sugarless chocolate also showed almost the same stability over time and resistance against artificial gastric juice as in Reference Example 1.

The lactic acid bacterium-containing sugarless chocolate can be made by blending lactic acid bacteria powder with 0 to 50% by weight of sugar alcohol, 0 to 70% by weight of cacao mass, 0 to 25% by weight of food using milk and the like as the main material, 0 to 25% by weight of vegetable fat or oil, and 0 to 25% by weight of cocoa butter, these amounts being appropriately changed within the above range. In addition, auxiliary materials such as high sweetness sweeteners, emulsifiers, flavors and the like may be appropriately added, and the blending amounts thereof may also be appropriately adjusted. Furthermore, 0 to 15% by weight of dietary fiber and 0 to 10% by weight of oligosaccharide may be blended. The oligosaccharides that may be used include, but are not limited to, fructo-oligosaccharide, galacto-oligosaccharide, isomalto-oligosaccharide, soybean oligosaccharide, and the like.

[Reference Example 5] Lactic Acid Bacterium-Containing Fat or oil Composition

1. Production of Lactic Acid Bacterium-Containing Fat or oil Composition

A lactic acid bacterium-containing fat or oil composition was prepared using the Labre bacteria powder prepared in the same manner as in Reference Example 1. The blending amounts are as shown in Table 17 below. The outline of the manufacturing method is shown in Fig. 4C. This lactic acid bacterium-containing fat or oil composition is in a solid state at around normal temperature (25°C), but becomes a liquid at around human body temperature (35°C to 40°C) and has physical properties like a hand cream.

The lactic acid bacterium-containing fat or oil composition can be made by blending lactic acid bacteria powder with 0 to 80% by weight of sugar, 20 to 99% by weight of vegetable fat or oil, 0 to 40% by weight of whole milk powder and 0 to 20% by weight of lactose, these amounts being appropriately changed within the above range. In addition, auxiliary materials such as high sweetness sweeteners, emulsifiers, flavors and the like may be appropriately added, and the blending amounts thereof may also be appropriately adjusted. Furthermore, 0 to 15% by weight of dietary fiber and 0 to 10% by weight of oligosaccharide may be blended. The lactic acid bacterium-containing fat or oil composition is a white chocolate composition or a similar composition to white chocolate, and can be used as a coating or as a material for topping on foods such as baked confectionery and chocolates, or as a material for decoration, and the like, but the composition is not limited to these applications.

[Table 17]

|  | % by weight |
| --- | --- |
| Sugar | 40 |
| Vegetable fat or oil | 34 |
| Whole milk powder | 19 |
| Lactose | 7 |
| Lactic acid bacteria | 0.5 |
| Total | 100 |

2. Time Course Test on Number of Viable Lactic Acid Bacteria in Lactic Acid Bacterium-Containing Fat or oil Composition

Regarding the manufactured lactic acid bacterium-containing fat or oil composition, as with a time course test on the number of viable lactic acid bacteria in the lactic acid bacterium-containing chocolate in Reference Example 1, the number of viable lactic acid bacteria in a sample of lactic acid bacterium-containing fat or oil composition immediately after production or after stored at room temperature (about 25°C) for 1 month to 2 months was examined. The results are shown in Table 18 below. It was found that the bacteria in the lactic acid bacterium-containing fat or oil composition can be maintained in an extremely stable and living state.

[Table 18]

|  | immediately after production | 1 month | 2 months |
| --- | --- | --- | --- |
| Number of viable bacteria (CFU/g) | 4.48E+07 | 4.36E+07 | 4.32E+07 |

3. Resistance Test of Lactic Acid Bacterium-Containing Fat or oil Composition against Artificial Gastric Juice

A resistance test of the manufactured lactic acid bacterium-containing fat or oil composition against artificial gastric juice was carried out in the same manner as in Reference Example 1. The results are shown in Table 19 below. Also, experiments were carried out similarly for the lactic acid bacteria powder as a control. It was found that the resistance of the lactic acid bacteria in the lactic acid bacterium-containing fat or oil composition against artificial gastric juice was much higher compared to the lactic acid bacteria powder.

[Table 19]

|  | time of addition | 30 minutes | 1 hour | 2 hours |
| --- | --- | --- | --- | --- |
| Lactic acid bacterium-containing fat or oil composition | 2.10E+08 | 2.55E+07 | 2.46E+07 | 3.45E+07 |

(continued)

| | time of addition | 30 minutes | 1 hour | 2 hours |
|---|---|---|---|---|
| Lactic acid bacteria powder | 2.29E+08 | 5.46E+05 | 3.63E+04 | 0.00E+00 |

This application is based on a patent application No. 2016-158335 filed in Japan (filing date: August 11, 2016), the contents of which are incorporated in full herein.

**Claims**

1.  A lactic acid bacterium-containing chocolate comprising a lactic acid bacterium in a living state, wherein the average particle size of solid particles in the lactic acid bacterium-containing chocolate is larger than 1 $\mu$m and less than 9 $\mu$m.

2.  The lactic acid bacterium-containing chocolate according to claim 1, wherein the average particle size of the solid particles in the lactic acid bacterium-containing chocolate is less than 7 $\mu$m.

3.  The lactic acid bacterium-containing chocolate according to claim 1 or 2, wherein the particle size has a single distribution peak.

4.  The lactic acid bacterium-containing chocolate according to any one of claims 1 to 3, wherein the lactic acid bacterium is any one or more kinds selected from the group consisting of genus Lactobacillus, genus Enterococcus, genus Bifidobacterium and genus Leuconostoc.

5.  The lactic acid bacterium-containing chocolate according to any one of claims 1 to 4, wherein the lactic acid bacterium is Lactobacillus brevis.

6.  The lactic acid bacterium-containing chocolate according to any one of claims 1 to 5, wherein the lactic acid bacterium is contained at not less than $1 \times 10^4$ bacteria/gram and not more than $1 \times 10^{12}$ bacteria/gram.

7.  The lactic acid bacterium-containing chocolate according to any one of claims 1 to 6, wherein the lactic acid bacterium is contained at not less than $1 \times 10^6$ bacteria/gram and not more than $1 \times 10^{12}$ bacteria/gram.

8.  A food comprising the lactic acid bacterium-containing chocolate according to any one of claims 1 to 7.

9.  A method for manufacturing a lactic acid bacterium-containing chocolate comprising atomizing a material to an average particle size of less than 9 $\mu$m.

10. The method for manufacturing a lactic acid bacterium-containing chocolate according to claim 9, wherein the material is atomized to an average particle size of less than 7 $\mu$m.

Fig. 1

Fig. 2

Fig. 3

EP 3 498 101 A1

Fig. 4A

**CONVENTIONAL METHOD**

MIXING OF RAW MATERIALS → ATOMIZATION → CONCHING AT 70°C TO 80°C → CHOCOLATE DOUGH (LACTIC ACID BACTERIA POWDER) → STORAGE IN TANK (45°C TO 50°C ABOUT 4 DAYS ON AVERAGE)

→ TEMPERING → MOLDING → DEMOLDING → PACKAGING

**MANUFACTURING METHOD 1**

MIXING OF RAW MATERIALS → ATOMIZATION → CONCHING AT 70°C TO 80°C → CHOCOLATE DOUGH → STORAGE IN TANK (45°C TO 50°C ABOUT 4 DAYS ON AVERAGE)

→ TEMPERING → MIXING AT 27°C TO 31°C (LACTIC ACID BACTERIA POWDER) → MOLDING → DEMOLDING → PACKAGING

**MANUFACTURING METHOD 2**

MIXING OF RAW MATERIALS → ATOMIZATION → CONCHING AT 70°C TO 80°C → CHOCOLATE DOUGH → STORAGE IN TANK (45°C TO 50°C ABOUT 4 DAYS ON AVERAGE)

CHOCOLATE DOUGH → MELT AT ABOUT 40°C → CHOCOLATE CONTAINING A HIGH LACTIC ACID BACTERIUM CONCENTRATION (LACTIC ACID BACTERIA POWDER)

MIX APPROXIMATELY 10wt% CHOCOLATE CONTAINING A HIGH LACTIC ACID BACTERIUM CONCENTRATION WITH A TEMPERED CHOCOLATE DOUGH

→ TEMPERING → MIXING AT 27°C TO 31°C → MOLDING → DEMOLDING → PACKAGING

EP 3 498 101 A1

Fig. 4B

LACTIC ACID
BACTERIA POWDER

| CHOCOLATE DOUGH | → | MIXING | → | COATING ALMOND WITH CHOCOLATE | → | GLAZING | → | PACKAGING |

42°C TO 43°C      37°C TO 38°C

Fig. 4C

| MIXING OF RAW MATERIALS | → | ATOMIZATION | → | CONCHING AT 40°C TO 50°C | → | FAT OR OIL COMPOSITION DOUGH | → | STORAGE IN TANK |

45°C TO 50°C
ABOUT 4 DAYS ON AVERAGE

LACTIC ACID BACTERIA POWDER

MIX APPROXIMATELY 10wt% FAT OR OIL
COMPOSITION CONTAINING A HIGH LACTIC
ACID BACTERIUM CONCENTRATION WITH
A TEMPERED FAT OR OIL COMPOSITION

| FAT OR OIL COMPOSITION DOUGH | → | MELT AT ABOUT 40°C | → | FAT OR OIL COMPOSITION CONTAINING A HIGH LACTIC ACID BACTERIUM CONCENTRATION |

| TEMPERING | → | MIXING AT 27°C TO 31°C | → | MOLDING | → | DEMOLDING | → | PACKAGING |

Fig. 5

(a)

EXPERIMENT ON DAY 1

(b)

EXPERIMENT ON DAY 2

(c)

## EXPERIMENT ON DAY 3

- □ LACTIC ACID BACTERIUM-CONTAINING CHOCOLATE
- ◇ BEVERAGE CONTAINING LACTIC ACID BACTERIA INCLUDING LABRE BACTERIA
- ○ BEVERAGE CONTAINING LACTIC ACID BACTERIA INCLUDING LABRE BACTERIA (OTHER PRODUCT)

Fig. 6

- □ LACTIC ACID BACTERIUM-CONTAINING CHOCOLATE
- △ LACTIC ACID BACTERIA POWDER

**INTERNATIONAL SEARCH REPORT**

| International application No. |
|---|
| PCT/JP2017/029046 |

A.  CLASSIFICATION OF SUBJECT MATTER
*A23G1/00(2006.01)i, A23G1/30(2006.01)i*

According to International Patent Classification (IPC) or to both national classification and IPC

B.  FIELDS SEARCHED

Minimum documentation searched (classification system followed by classification symbols)
A23G1/00, A23G1/30

Documentation searched other than minimum documentation to the extent that such documents are included in the fields searched
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)
JSTPlus/JMEDPlus/JST7580(JDreamIII), CAplus/MEDLINE/EMBASE/BIOSIS(STN), WPIDS/WPIX(STN), FSTA(STN)

C.  DOCUMENTS CONSIDERED TO BE RELEVANT

| Category* | Citation of document, with indication, where appropriate, of the relevant passages | Relevant to claim No. |
|---|---|---|
| X/Y | ZARIC, Danica B. et al., Functional, rheological and sensory properties of probiotic milk chocolate produced in a ball mill, RSC Adv., 2016.01.28, Vol. 6, p. 13934–13941, ISSN 2046-2069, Table 1, 2, Fig .1 | 1,4,6-9/2-8, 10 |
| Y | JP 05-284911 A (Fuji Oil Co., Ltd.), 02 November 1993 (02.11.1993), claims; examples & US 5460847 A claims; examples | 2-8,10 |
| Y | JP 2013-074818 A (Meiji Co., Ltd.), 25 April 2013 (25.04.2013), claims; examples (Family: none) | 2-8,10 |

| [×] Further documents are listed in the continuation of Box C. | [ ] See patent family annex. |
|---|---|

*    Special categories of cited documents:
"A"    document defining the general state of the art which is not considered   to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| 19 October 2017 (19.10.17) | 31 October 2017 (31.10.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
| --- |
| PCT/JP2017/029046 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | YONEJIMA, Yasunori et al., Lactic acid bacteria-containing chocolate as a practical probiotic product with increased acid tolerance, Biocatalysis and Agricultural Biotechnology, 2015, Vol. 4, p. 773-777, ISSN 1878-8181, Fig. 1-4., Table 1 | 5-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8126473 A
- JP 2016543748 A

- JP 2016158335 A

**Non-patent literature cited in the description**

- *Nippon Shokuhin Kagaku Kogaku Kaishi,* 2001, vol. 48 (9), 656-663